# EUROPÄISCHE PATENTSCHRIFT

(11) **EP 2 483 958 B1**
(45) Veröffentlichungstag und Bekanntmachung des Hinweises auf die Patenterteilung: **26.12.2018**
(21) Anmeldenummer: 10754431.4
(22) Anmeldetag: 10.09.2010
(51) Int. Cl.: H01M 8/04089, H01M 8/04111

(54) **VERFAHREN ZUM BETREIBEN EINES BRENNSTOFFZELLENSYSTEMS**
METHOD FOR OPERATING A FUEL CELL SYSTEM
PROCÉDÉ POUR FAIRE FONCTIONNER UN SYSTÈME DE PILE À COMBUSTIBLE

(30) Priorität: 30.09.2009 DE 102009043569
(43) Veröffentlichungstag der Anmeldung: 08.08.2012
(73) Patentinhaber: Daimler AG, 70327 Stuttgart (DE)
(72) Erfinder: MÜTSCHELE, Armin, 73235 Weilheim (DE); RICHTER, Holger, 73230 Kirchheim (DE)
(74) Vertreter: JENSEN & SON
(86) Internationale Anmeldenummer: PCT/EP2010/005565
(87) Internationale Veröffentlichungsnummer: WO 2011/038830

(56) Entgegenhaltungen:
- DE-A1- 10 150 386
- DE-A1- 10 216 953
- DE-A1- 10 314 820
- DE-A1-102007 004 347
- DE-T5-112007 000 822
- JP-A- 2007 192 179
- US-A- 5 573 867
- US-A1- 2002 163 819

## Beschreibung

Die Erfindung betrifft ein Verfahren zum Betreiben eines Brennstoffzellensystems nach der im Oberbegriff von Anspruch 1 näher definierten Art.

Brennstoffzellensysteme sind aus dem allgemeinen Stand der Technik bekannt. Sie können dabei beispielsweise mit einer Luftfördereinrichtung und einer abluftseitigen Turbine ausgerüstet sein, wie es beispielsweise durch das deutsche Patent mit der Nummer DE 102 16 953 B4 beschrieben ist.

Nun ist es außerdem bekannt, dass sich beim Betrieb von Brennstoffzellen Feuchtigkeit beziehungsweise Wasser als eines der Produkte entsteht. Hierfür ist es aus dem allgemeinen Stand der Technik bekannt, Brennstoffzellensysteme beim Abschalten mit Luft zu durchspülen, um diese entsprechend zu trocknen und so zu verhindern, dass Wasser bei Temperaturen unterhalb des Gefrierpunkts einfriert. Ein solches Verfahren ist beispielsweise in der deutschen Offenlegungsschrift DE 101 50 386 A1 beschrieben. Außerdem beschreibt die DE 103 14 820 A1 ein vergleichbares Verfahren als Verfahren zum Verhindern der Einfrierung von Wasser in einer mindestens ein bewegliches Teil enthaltenen Baueinheit in einem Anodenkreislauf eines Brennstoffzellensystems.

Aus der zuerst genannten deutschen Patentschrift DE 102 16 953 B4 ist außerdem ein sogenanntes Umblasventil bekannt, über welches der Ausgang eines Strömungsverdichters mit dem Eingang der unmittelbar mit diesem Strömungsverdichter verbundenen Turbine verbunden werden kann. Über dieses Umblasventil kann die zu der Brennstoffzelle strömende Luftmenge entsprechend eingestellt werden, da ein Abluftpfad mit weniger Druckverlust geschaffen werden kann, über welchen ein Teil der verdichteten Luft wieder abgeblasen wird. Dies ist notwendig, um den dort beschriebenen Turbolader in Form eines Freiläufers entsprechend kurzfristig ansteuern zu können, da ansonsten die schnelle Regelung des Massestroms der Luftversorgung schwierig ist.

Die DE 112007000822 T5 zeigt ein Verfahren zum Verhindern eines Einfrierens eines Ventils eines Brennstoffzellenbetriebssystems auf, bei dem über ein Umgehungsventil, welches den eintrittsseitigen Flussweg mit dem austrittsseitigen Flussweg verbindet, ein Ausstoßen von Wasser im austrittseitigen Flussweg durch hohen Druck ermöglicht. Hierzu wird das Umgehungsventil vollständig geöffnet, so dass unter Druck gehaltene Luft dem Umgehungsweg zugeführt wird und das Wasser, welches vorhanden ist, ausstößt. Zur Unterstützung des Ausstoßens kann ein Öffnen mit Unterbrechungen, also ein gepulster Betrieb des Ventils effizient sein.

Bei dem oben beschriebenen Spülen eines Brennstoffzellensystems mit Luft treten nun im Wesentlichen zwei Nachteile auf. Um das gesamte System und hier insbesondere die Turbine vollkommen frei von flüssigen Tröpfchen zu bekommen, sodass diese beim Wiederstart des Systems durch gegebenenfalls eingefrorene Tröpfchen nicht blockiert wird, ist eine vergleichsweise große Luftmenge notwendig. Diese muss durch das gesamte System gefördert werden, was einerseits einen hohen Energiebedarf zum Bereitstellen der Spülluft nach sich zieht und andererseits die Membranen der als PEM-Brennstoffzellenstapel ausgebildeten Brennstoffzelle unnötig stark austrocknet.

Es ist daher die Aufgabe ein Verfahren zum Betreiben eines Brennstoffzellensystems bereitzustellen, welches einen sicheren Betrieb und insbesondere einen sicheren Wiederstart bei Temperaturen unterhalb des Gefrierpunkts ermöglicht, ohne die PEM-Brennstoffzelle selbst längerfristig zu schädigen, und welches darüber hinaus einen möglichst geringen Energiebedarf aufweist.

Erfindungsgemäß wird diese Aufgabe durch das Verfahren mit den Merkmalen im kennzeichnenden Teil des Anspruchs 1 gelöst. Weitere vorteilhafte Ausgestaltungen des erfindungsgemäßen Verfahrens ergeben sich aus den restlichen abhängigen Ansprüchen.

In dem erfindungsgemäßen Verfahren ist es vorgesehen, dass während des Spülens eine Verbindung zwischen der Luftfördereinrichtung und der Abluftseite zwischen PEM-Brennstoffzelle und Turbine geschaffen wird. Eine solche Verbindung, welche beispielsweise über ein sogenanntes Systembypassventil realisiert werden kann, erlaubt es nun zumindest während eines Teils der Zeit des Spülvorgangs die Spülluft, nachdem diese durch die Luftfördereinrichtung verdichtet worden ist, direkt oder zumindest unter Umgehung der Brennstoffzelle selbst in den Bereich der Turbine zu leiten.

Die Spülluft wird also für einen Teil der Zeit des Spülvorgangs direkt in die Turbine geleitet, ohne zuvor die Brennstoffzelle selbst zu durchströmen, und dient so mit minimalem Energieeinsatz lediglich dem Trocknen der Turbine. Dadurch wird eine übermäßige Austrocknung der Brennstoffzelle verhindert und der durch den Druckverlust in der Brennstoffzelle entstehende Energiebedarf wird vermieden.
So kann mit vergleichsweise wenig Druckverlust und damit wenig Energieeinsatz ein Volumenstrom durch die Turbine realisiert werden. Die Turbine wird dadurch angetrieben und schleudert eventuelle Tröpfchen durch die Zentrifugalkraft ab. Diese werden dann ausgespült und/oder von der in der Luftfördereinrichtung erwärmten Luft aufgetrocknet. Die Turbine verbleibt damit in einem vollkommen trockenen Zustand, sodass diese bei einem Wiederstart auch bei Temperaturen unterhalb des Gefrierpunkts nicht durch auskondensierte und gefrorene Wassertröpfchen blockiert werden kann. Sie kann dementsprechend sofort anlaufen und ihre Funktionalität aufnehmen.

In einer besonders günstigen und vorteilhaften Ausgestaltung des erfindungsgemäßen Verfahrens ist es dabei vorgesehen, dass das Spülen unmittelbar nach dem Abschalten des Brennstoffzellensystems erfolgt. Dieser Spülvorgang entspricht hinsichtlich des Zeitpunkts dem klassischen Spülvorgang, wie er aus dem Stand der Technik bekannt ist. Allerdings wird auch hierbei, wie zuvor im erfinderischen Verfahren beschrieben, zumindest für einen Teil der Zeit die Spülluft über das Systembypassventil geführt und so die Spülluft direkt in die Turbine geleitet, ohne zuvor die Brennstoffzelle selbst zu durchströmen.

Gemäß einer sehr günstigen und vorteilhaften Weiterbildung des erfindungsgemäßen Verfahrens kann es ferner vorgesehen sein, dass das Spülen zusätzlich während des Betriebs des Brennstoffzellensystems gelegentlich erfolgt. Dies gibt die Möglichkeit, dass in dem System in bestimmten Betriebsphasen oder nach Ablauf einer bestimmten Zeit, insbesondere sofern eine Temperatur unterhalb des Gefrierpunkts vorliegt, ein gelegentliches Spülen des Systems beziehungsweise der Turbine erfolgt. Somit kann während des Betriebs oder insbesondere während kurzer Stillstandsphasen, beispielsweise in einem Standby-Betrieb, welcher durch einen Start-Stopp-Betrieb des Brennstoffzellensystems in einem Fahrzeug entstehen kann, das Einfrieren ebenfalls verhindert werden.

In einer besonders günstigen und vorteilhaften Weiterbildung des erfindungsgemäßen Verfahrens ist es dabei ferner vorgesehen, dass die Luftfördereinrichtung zumindest teilweise durch die Turbine angetrieben wird. Dieser Aufbau, welcher beispielsweise als Freiläufer, insbesondere aber als sogenannter elektrischer Turbolader (ETC = Electric Turbo Charger) realisiert werden kann, ermöglicht es einen Teil der zum Verdichten der Spülluft benötigten Energie durch eine Entspannung in der Turbine zurückzugewinnen. Die Turbine liefert diese Energie dann beispielsweise zusätzlich zu einem elektromotorischen Antrieb der Luftfördereinrichtung zur Reduzierung der benötigten elektrischen Antriebsleistung der Luftfördereinrichtung.

In einer weiteren sehr günstigen und vorteilhaften Ausgestaltung des erfindungsgemäßen Verfahrens ist es nun außerdem vorgesehen, dass dieses zum Betreiben eines Brennstoffzellensystems in einem Transportmittel, insbesondere einem Kraftfahrzeug, eingesetzt wird. Der Aufbau ermöglicht es das Brennstoffzellensystem so abzuschalten und so zu betreiben, dass es durch Temperaturen unterhalb des Gefrierpunkts nicht zu Problemen hinsichtlich eines Wiederstarts oder eines Wiederanfahrens des Systems kommen kann. Diese Anwendung ist bevorzugt bei Transportmitteln einzusetzen, welche vergleichsweise häufig ein Abstellen und Wiederstarten des Brennstoffzellensystems erfordern, und welche typischerweise häufig im Außenbereich und damit gegebenenfalls auch bei Temperaturen unterhalb des Gefrierpunkts unterwegs sind.

Weitere vorteilhafte Ausgestaltungen der Erfindung ergeben sich aus den restlichen abhängigen Ansprüchen und werden anhand des Ausführungsbeispiels deutlich, welches nachfolgend unter Bezugnahme auf die Figuren näher beschrieben wird.

Dabei zeigen:
- Fig. 1: eine erste mögliche Ausführungsform eines Brennstoffzellensystems zur Nutzung mit dem erfindungsgemäßen Verfahren; und
- Fig. 2: eine zweite mögliche Ausführungsform eines Brennstoffzellensystems zur Nutzung mit dem erfindungsgemäßen Verfahren.

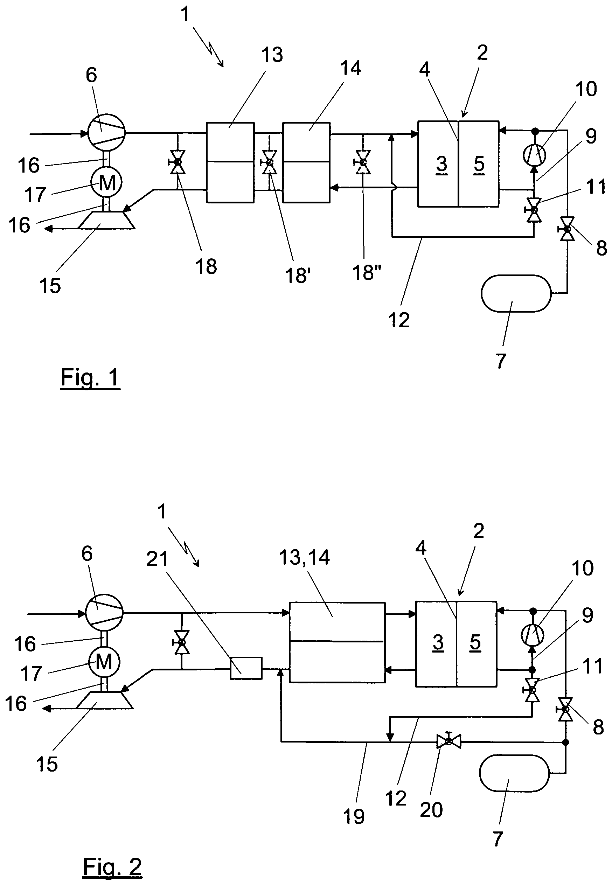

In der Darstellung der Figur 1 ist ein Brennstoffzellensystem 1 zu erkennen. Der Kern des Brennstoffzellensystems 1 ist eine Brennstoffzelle 2, welche einen Kathodenraum 3 aufweist, welcher durch protonenleitende Membranen 4 von einem Anodenraum 5 getrennt ist. Die Brennstoffzelle 2 soll dabei in bevorzugter Ausführungsform als PEM-Brennstoffzellenstapel ausgebildet sein. Der Brennstoffzelle 2 beziehungsweise dem Kathodenraum 3 der Brennstoffzelle 2 wird über eine Luftfördereinrichtung 6 Luft zugeführt. In der Brennstoffzelle 2 wird der Sauerstoff in dieser Luft dann zusammen mit Wasserstoff aus einer Wasserstoffspeichereinrichtung 7 in elektrische Leistung und Produktwasser umgesetzt. Dies erfolgt durch die Membranen 4 hindurch. Der Wasserstoff aus der Wasserstoffspeichereinrichtung 7 wird dazu über eine Ventileinrichtung 8 dem Anodenraum 5 der Brennstoffzelle 2 dosiert zugeführt. Um die Brennstoffzelle 2 in allen Bereichen immer mit einer ausreichenden Menge an Wasserstoff versorgen zu können, wird typischerweise mehr Wasserstoff in den Anodenraum 5 eingeleitet, als in diesem umgesetzt werden kann. Der verbleibende Restwasserstoff gelangt dann über eine Rezirkulationsleitung 9 und eine Rezirkulationsfördereinrichtung 10 zurück in den Bereich des Eingangs des Anodenraums 5. Von hier strömt er zusammen mit frischem Wasserstoff aus der Wasserstoffspeichereinrichtung 7 erneut in den Bereich des Anodenraums 5. Dieser sogenannte Anodenkreislauf ist dabei aus dem allgemeinen Stand der Technik bekannt. Mit der Zeit reichert sich in diesem Anodenkreislauf Stickstoff beziehungsweise inertes Gas an, welches aus dem Kathodenraum 3 durch die Membranen 4 hindurch in den Anodenraum 5 diffundiert. Außerdem fällt im Bereich der Rezirkulationsleitung 9 Wasser an, welches im Anodenraum 5 entsteht. Dies ist zwar nicht eine so große Menge an Produktwasser, wie sie im Kathodenraum 3 entsteht, durch die Kreislaufführung reichert sich inertes Gas und Wasser jedoch in dem Kreislauf an. Je mehr Wasser und inertes Gas im Kreislauf befindlich sind, desto kleiner wird die Konzentration des Wasserstoffs, sodass hierunter die Performance der Brennstoffzelle 2 mit der Zeit leidet. Daher ist ein Ablassventil 11 vorgesehen, um Wasser und/oder inertes Gas über eine Ablassleitung 12 abzulassen. Dieses Abgas aus dem Anodenraum 5 wird dabei der Zuluft zu dem Kathodenraum 3 zugeführt. Da über das Ablassventil 11 immer auch ein gewisser Rest an Wasserstoff mit abgelassen wird, kann dieser dann an den Elektrokatalysatoren im Kathodenraum 3 abreagieren, sodass dieser nicht an die Umgebung gelangt. Auch diese Vorgehensweise ist aus dem allgemeinen Stand der Technik bei Brennstoffzellensystem 1 bekannt.

Nun ist es so, dass die zu der Brennstoffzelle 2 geförderte Luft nach der Luftfördereinrichtung 6 entsprechend heiß und trocken ist. Sie durchströmt daher zuerst einen Ladeluftkühler 13, welcher als Gas-Gas-Wärmetauscher ausgebildet ist und die heiße Zuluft durch die kühle Abluft aus dem Kathodenraum 3 entsprechend kühlt. Außerdem durchströmt die Zuluft einen Befeuchter 14, welcher mit für Wasserdampf durchlässigen Membranen ausgebildet ist. In dem Befeuchter 14 wird die nunmehr abgekühlte jedoch immer noch trockene Zuluft dann durch die für Wasserdampf durchlässigen Membranen hindurch von der feuchten Abluft aus dem Kathodenraum 3 befeuchtet. Damit gelangt eine vergleichsweise kühle und feuchte Luft in den Kathodenraum 3. Der in dieser Luft enthaltene Sauerstoff wird - zumindest teilweise - umgesetzt und durch die Feuchte in der Luft werden die Membranen 4 entsprechend feucht gehalten, sodass diese nicht austrocknen können. Dies ist für die Performance der Membranen 4 und deren Unversehrtheit beziehungsweise Dichtheit wichtig.

Nach dem Durchströmen des Ladeluftkühlers 13 gelangt die Abluft aus dem Kathodenraum 3 dann in eine Turbine 15, in welcher sie entspannt wird, um ein Teil der Druckenergie, welche beim Verdichten der Zuluft in der Luftfördereinrichtung 6 aufgewendet wurde, wieder zurückzugewinnen. Die Turbine 15 ist dabei über eine Welle 16 mit der Luftfördereinrichtung 6 verbunden. Im Bereich der Welle 16 ist außerdem eine elektrische Maschine 17 angeordnet. Über diese Maschine 17 kann bei Bedarf die Luftfördereinrichtung 6 entsprechend angetrieben werden. An der Turbine 15 anfallende Leistung wird über die Welle 16 ebenfalls zum Antrieb der Luftfördereinrichtung 6 genutzt. Soll die Luftfördereinrichtung 6 keine oder nur eine minimale Menge an Leistung benötigen, insbesondere weniger als im Bereich der Turbine 15 anfällt, dann kann die elektrische Maschine 17 auch als Generator betrieben werden, um so durch die Turbine 15 gewonnene Leistung in elektrische Leistung umzusetzen. Diese elektrische Leistung kann dann wiederum zum Antrieb weiterer Komponenten genutzt werden und/oder in einer elektrischen Energiespeichereinrichtung eingespeichert werden, um bei Bedarf wieder für die elektrische Maschine 17 im motorischen Betrieb oder andere elektrische Verbraucher im Bereich des Brennstoffzellensystems 1 genutzt zu werden.

Dieser bis hierher beschriebene Aufbau ist so aus dem Stand der Technik bekannt. Das Brennstoffzellensystem 1 kann beispielsweise als stationäres Brennstoffzellensystem ausgebildet sein. Es kann insbesondere jedoch auch zum Antrieb eines Transportmittels, also eines beliebigen beweglichen Mittels auf dem Wasser, auf dem Land oder in der Luft eingesetzt werden. Ein bevorzugter Einsatz des Brennstoffzellensystems 1 liegt insbesondere bei der Nutzung zur Bereitstellung von elektrischer Antriebsenergie in einem Kraftfahrzeug, beispielsweise einem Personenkraftwagen oder einem Nutzfahrzeug. Speziell in diesen Situationen ist es erforderlich, dass das Brennstoffzellensystem auch bei Temperaturen unterhalb des Gefrierpunkts zuverlässig arbeitet und insbesondere, wenn es bei Temperaturen unterhalb des Gefrierpunkts gestartet wird, einen schnellen und zuverlässigen Start des Brennstoffzellensystems 1 ermöglicht. Hierfür ist es aus dem allgemeinen Stand der Technik bekannt, dass das Brennstoffzellensystem 1 insbesondere beim Abstellen desselben in einen Zustand verbracht werden muss, in dem ein sicherer und zuverlässiger Wiederstart möglich ist. Dies gilt insbesondere, wenn das Abstellen bei Temperaturen unterhalb des Gefrierpunkts erfolgt, oder wenn nachdem das Brennstoffzellensystem 1 abgestellt ist, die Temperaturen vor dem Wiederstart des Brennstoffzellensystems 1 unter den Gefrierpunkt fallen können. In diesen Situationen kann flüssiges Wasser in dem Bereich des Brennstoffzellensystems 1, welches als Produktwasser hochrein anfällt und daher bereits bei 0° gefriert, in Leitungen und/oder funktionalen Bauteilen gefrieren. Insbesondere kann die Turbine 15 durch gefrorene Tröpfchen blockiert werden, sodass ein Wiederstart des Brennstoffzellensystems 1 nicht oder nur nach einem langwierigen Auftauen der Turbine 15 möglich ist. Dies gilt insbesondere dann, wenn die Turbine 15 über die Welle 16 fest mit der Luftfördereinrichtung 6 verbunden ist, da dann durch gefrorene Tröpfchen nicht nur die Turbine 15, sondern auch die Luftfördereinrichtung 6 entsprechend blockiert wird.

Aus dem allgemeinen Stand der Technik ist es daher bekannt, das Brennstoffzellensystem 1 entsprechend durchzuspülen, um Feuchtigkeit beispielsweise in einer Abschaltprozedur des Brennstoffzellensystems 1 auszutreiben und aufzutrocknen. Damit ist das Brennstoffzellensystem 1 nach dem Abschalten in einem trockenen Zustand. Dies bedeutet, dass kein Wasserdampf mehr vorhanden ist, welcher auskondensieren könnte, und dass kein flüssiges Wasser mehr vorhanden ist, welches an kritischen Stellen des Brennstoffzellensystems 1 einfrieren und Leitungselemente verstopfen könnte. Dies gilt insbesondere für den Ladeluftkühler, den Befeuchter und den Kathodenraum 3 der Brennstoffzelle selbst. Prinzipiell gilt dies auch für den Anodenraum. Da die hier vorliegende Erfindung sich jedoch nur mit der Kathodenseite der Brennstoffzelle 2 beziehungsweise des Brennstoffzellensystems 1 beschäftigt, soll hierauf nicht näher eingegangen werden.

Das Spülen der Kathodenseite des Brennstoffzellensystems 1 wird nun durch verdichtete Luft aus der Luftfördereinrichtung 6 durchgeführt. Die Luft wird durch den Ladeluftkühler 13, den Befeuchter 14 und den Kathodenraum 3 der Brennstoffzelle 2 gedrückt und gelangt dann über die Abluftleitung in den Bereich der Turbine 15, bevor sie an die Umgebung des Brennstoffzellensystems 1 austritt. Um nun alle Komponenten, insbesondere die in dieser Reihenfolge zuletzt genannte Turbine 15 frei von flüssigem Wasser und Wasserdampf zu bekommen, ist eine vergleichsweise große Luftmasse notwendig, sodass ein entsprechend hoher Energieaufwand beim Verdichten der erforderlichen Luft in der Luftfördereinrichtung 6 entsteht. Außerdem trocknet die große Luftmasse und der damit bedingte große Volumenstrom an trockener Luft insbesondere die Membranen 4 der Brennstoffzelle 2 sehr stark aus, sodass ein Durchführen eines solchen Verfahrens bis die Turbine 15 trocken ist, die Membranen 4 der Brennstoffzelle 2 zumindest langfristig gesehen schädigt.

Das erfindungsgemäße Verfahren sieht es daher vor, dass über eine Ventileinrichtung 18 ein sogenanntes Systembypassventil, zumindest nachdem das Spülen für eine gewisse Zeit angedauert hat, eine Verbindung zwischen der Luftfördereinrichtung 6 und der Abluft vor dem Erreichen der Turbine 15 hergestellt wird. Dadurch entsteht ein Weg für die Luft, welcher einen geringeren Druckverlust aufweist, als der Weg durch die Komponenten 13, 14 und 3. Ein großer Teil der Luft wird also über das Systembypassventil 18 direkt von der Luftfördereinrichtung 6 in den Bereich der Turbine 15 gelangen und diese entsprechend trocknen. Dies ist mit vergleichsweise geringem Energieaufwand möglich und erlaubt es, die Membranen 4 der Brennstoffzelle 2 entsprechend zu schonen, nachdem diese auf ein für einen späteren Wiederstart ausreichendes Feuchtigkeitsniveau getrocknet wurden.

Prinzipiell wäre es natürlich denkbar, das Systembypassventil 18 nicht nur unmittelbar zwischen dem Ausgang der Luftfördereinrichtung 6 und dem Einlass der Turbine 15 anzuordnen, sondern dieses als Verbindung der Zuluftleitung beispielsweise zwischen dem Ladeluftkühler 13 und dem Befeuchter 14 anzuordnen oder auch zwischen dem Befeuchter 14 und dem Kathodenraum 3 der Brennstoffzelle 2. Dies ist durch die optionalen Systembypassventile 18' und 18" in Figur 1a angedeutet. Prinzipiell wäre es auch denkbar, nicht nur ein Systembypassventil 18 anzuordnen, sondern an zwei oder allen drei Stellen eine eigene Ventileinrichtung 18, 18', 18" vorzusehen. Diese könnten dann je nach gewünschtem Trocknungsgrad der einzelnen Komponenten nacheinander geschlossen werden, sodass jeweils nur die zu trocknende Komponente beziehungsweise die zu trocknenden Komponenten von der über die Luftfördereinrichtung 6 geförderten Luft durchströmt werden müssen. Damit ist ein schonender und energieeffizienter Ablauf des Spülvorgangs gewährleistet.

Das primäre Ziel des Spülens des Brennstoffzellensystems 1 beziehungsweise seiner Kathodenseite mit trockener Luft liegt nun unmittelbar nach dem Abschalten des Brennstoffzellensystems 1, um dieses in einen Zustand zu versetzen, in dem dieses optimal und sehr schnell wieder gestartet werden kann. Alternativ oder ergänzend kann ein solcher Spülvorgang nun auch während des Betriebs des Brennstoffzellensystems 1 durchgeführt werden, insbesondere dann, wenn die Temperatur, also die Umgebungstemperatur des Brennstoffzellensystems 1, unterhalb des Gefrierpunkts liegt, oder wenn diese so niedrig ist, dass zu erwarten ist, dass diese in naher Zeit unterhalb des Gefrierpunkts fällt. Ein solches gelegentliches Spülen kann dann analog zu dem oben genannten Spülvorgang beispielsweise durch ein Öffnen des Systembypassventils 18 und ein Austrocknen der Turbine 15 durchgeführt werden, um zu verhindern, dass Wasser im Bereich der Turbine einfriert, wenn diese im langsamen Betrieb oder beispielsweise in einem Standby-Betrieb während einer Stoppphase eines mit dem Brennstoffzellensystem 1 und einer Start-Stopp-Steuerung ausgestatteten Fahrzeugs ist. Dann kann durch das Trocknen mit minimalem Energieeinsatz über das Systembypassventil 18 ein solches Einfrieren verhindert werden, da eine blockierte Turbine 15 typischerweise auch die Abluft und gegebenenfalls die Luftfördereinrichtung 6 blockiert und damit ein Betrieb des Brennstoffzellensystems 1 unmöglich macht oder zumindest deutlich erschwert.

Die Brennstoffzelle 2 selbst, der Ladeluftkühler 13 und der Befeuchter 14 liegen dabei typischerweise im Inneren des Systems und weisen eine vergleichsweise große Masse auf, sodass hier ein Einfrieren während einer kurzen Stillstandsphase eher nicht zu befürchten ist. Die Turbine liegt zusammen mit der Luftfördereinrichtung jedoch häufig außerhalb des eigentlichen Brennstoffzellensystems, sodass hier während kurzer Standby-Phasen eher die Gefahr eines Einfrierens besteht. Daher reicht dann ein ausschließliches Spülen der Turbine über das Systembypassventil 18 im Allgemeinen aus.

Prinzipiell kann auch für ein Spülen beim Abschalten vorgesehen werden, dass dieses nur bei Temperaturen unterhalb des Gefrierpunkts oder bei sehr niedrigen Temperaturen, welche erwarten lassen, dass die Temperaturen bis zum Wiederstart unterhalb des Gefrierpunkts fallen, vorgenommen werden. Da eine solche Diagnose jedoch sehr schwierig ist, da beispielsweise hohe Tagtemperaturen beim Abstellen des Fahrzeugs und stark davon abweichende Nachttemperaturen unterhalb des Gefrierpunkts auftreten können. Wenn der Wiederstart dann erst am nächsten Morgen erfolgt, kann es zu einem Einfrieren des Systems kommen. Daher kann es gemäß einer bevorzugten Ausführungsform des erfindungsgemäßen Verfahrens vorgesehen sein, dass das Spülen des Systems beim endgültigen, längerfristigen Abschalten in jedem Fall erfolgt.

In der Darstellung der Figur 2 ist nun ein alternatives Brennstoffzellensystem 1 dargestellt, welches ebenfalls mit dem erfindungsgemäßen Verfahren zum Spülen eingesetzt werden kann. Nachfolgend wird daher nur auf die Unterschiede des Brennstoffzellensystems der Figur 2 gegenüber dem Brennstoffzellensystem 1 in der Figur 1 eingegangen. Ein erster Unterschied liegt beispielsweise darin, dass hier der Ladeluftkühler 13 und der Befeuchter 14 in einer einzigen Baueinheit zusammengefasst sind. Eine solche Baueinheit wird typischerweise auch als Enthalpie-Austauscher bezeichnet. Außerdem mündet die Ablassleitung 12 für das Abgas aus dem Anodenraum 5 nicht in die Zuluft zum Kathodenraum 3, sondern in eine Gasleitung 19, welche über eine Ventileinrichtung 20 außerdem mit der Wasserstoffspeichereinrichtung 7 verbunden ist. Die Gasleitung 19 führt dann in den Bereich der Abluft, und zwar vor einem Brenner 21, welcher zum Verbrennen des Restwasserstoffs in dem Abgas und/oder über die Ventileinrichtung 20 zugeführten optionalen Wasserstoff ausgebildet ist. Der Brenner 21 kann dabei als Porenbrenner oder insbesondere als katalytischer Brenner ausgebildet sein. Er ist in der Lage die Temperatur in der Abluft entsprechend zu erhöhen, um die Effizienz der Turbine 15 zu steigern und so die durch die elektrische Maschine 17 benötigte Leistung zum Verdichten der Luft in der Luftfördereinrichtung 6 zu reduzieren.

Ansonsten kann das Brennstoffzellensystem 1 gemäß der Ausgestaltung der Figur 2 genauso betrieben werden, wie das oben genannte Brennstoffzellensystem. Insbesondere kann beim Abschalten oder in geeigneten Betriebszuständen ein Spülen erfolgen, um das Brennstoffzellensystem 1 beziehungsweise die Kathodenseite des Brennstoffzellensystems 1 entsprechend zu trocknen.

## Patentansprüche

1. Verfahren zum Betreiben eines Brennstoffzellensystems mit wenigstens einer PEM-Brennstoffzelle sowie einer zuluftseitigen Luftfördereinrichtung und einer abluftseitigen Turbine, wobei das Brennstoffzellensystem zumindest während einer Abschaltprozedur mit Luft aus der Luftfördereinrichtung gespült wird,
**dadurch gekennzeichnet, dass**
während des Spülens eine Verbindung zwischen der Luftfördereinrichtung (6) und der Abluftseite zwischen PEM-Brennstoffzelle (2) und Turbine (15) geschaffen wird, so dass zumindest für einen Teil der Zeit über die Verbindung Luft aus der Luftfördereinrichtung direkt zum Spülen in die Turbine geleitet wird, ohne zuvor die Brennstoffzelle selbst zu durchströmen.

2. Verfahren nach Anspruch 1,
**dadurch gekennzeichnet, dass**
das Spülen während der Abschaltprozedur unmittelbar nach dem Abschalten des Brennstoffzellensystems (1) erfolgt.

3. Verfahren nach Anspruch 1 oder 2,
**dadurch gekennzeichnet, dass**
die Verbindung zwischen der Luftfördereinrichtung (6) und der Abluftseite erst geschaffen wird, wenn das Spülen bereits eine gewisse Zeit angedauert hat.

4. Verfahren nach Anspruch 1, 2 oder 3,
**dadurch gekennzeichnet, dass**
das Spülen nur durchgeführt wird, wenn die Umgebungstemperatur einen vorgegebenen Wert unterschreitet.

5. Verfahren nach einem der Ansprüche 1 bis 4,
**dadurch gekennzeichnet, dass**
das Spülen zusätzlich während des Betriebs des Brennstoffzellensystems (1) gelegentlich erfolgt.

6. Verfahren nach Anspruch 5,
**dadurch gekennzeichnet, dass**
das gelegentliche Spülen in Abhängigkeit von der Umgebungstemperatur und der Betriebsdauer seit dem letzten Spülen ausgelöst wird.

7. Verfahren nach Anspruch 5 oder 6,
**dadurch gekennzeichnet, dass**
das gelegentliche Spülen in geeigneten Betriebszuständen des Brennstoffzellensystems (1) ausgelöst wird.

8. Verfahren nach einem der Ansprüche 1 bis 7,
**dadurch gekennzeichnet, dass**
die Luftfördereinrichtung (6) zumindest teilweise durch die Turbine (15) angetrieben wird.

9. Verfahren nach einem der Ansprüche 1 bis 8,
**dadurch gekennzeichnet, dass**
eine Elektromaschine (17) wahlweise zum motorischen Antrieb oder zur generatorischen Nutzung in zumindest mittelbarer Verbindung mit der Luftfördereinrichtung (6) und der Turbine (15) steht.

10. Verfahren nach einem der Ansprüche 1 bis 9,
**dadurch gekennzeichnet, dass**
es zum Betreiben eines Brennstoffzellensystems (1) in einem Transportmittel, insbesondere einem Kraftfahrzeug, eingesetzt wird.

11. Verfahren nach Anspruch 10,
**dadurch gekennzeichnet, dass**
das Brennstoffzellensystem (1) zum Antrieb des Transportmittels eingesetzt wird.

## Claims

1. Method for operating a fuel cell system with at least one PEM fuel cell and with a supply air-side air delivery device and an exhaust-air side turbine, wherein the fuel cell system is purged with air from the air delivery device at least during a deactivation procedure,
**characterised in that**
during the purging process a connection is established between the air delivery device (6) and the exhaust air side between the PEM fuel cell (2) and the turbine (15), so that air from the air delivery device is directly introduced into the turbine via the connection for at least a part of the time without first flowing through the fuel cell itself.

2. Method according to claim 1,
**characterised in that**
the purging process is carried out during the deactivation procedure directly after the deactivation of the fuel cell system (1).

3. Method according to claim 1 or 2,
**characterised in that**
the connection between the air delivery device (6) and the exhaust air side is established only after the purging process has run for a specific time.

4. Method according to claim 1, 2 or 3,
**characterised in that**
the purging process is carried out only if the ambient temperature falls below a preset value.

5. Method according to any of claims 1 to 4,
**characterised in that**
the purging process is additionally carried out on occasions during the operation of the fuel cell system (1).

6. Method according to claim 5,
**characterised in that**
the occasional purging process is triggered as a function of the ambient temperature and the operating time since the last purge.

7. Method according to claim 5 or 6,
**characterised in that**
the occasional purging process is triggered in suitable operating conditions of the fuel cell system (1).

8. Method according to any of claims 1 to 7,
**characterised in that**
the air delivery device (6) is at least partially driven by the turbine (15).

9. Method according to any of claims 1 to 8,
**characterised in that**
an electric machine (17) is optionally connected at least indirectly to the air delivery device (6) and the turbine (15) for motor drive or for generator usage.

10. Method according to any of claims 1 to 9,
**characterised in that**
it is used for operating a fuel cell system (1) in a means of transport, in particular in a motor vehicle.

11. Method according to claim 10,
**characterised in that**
the fuel cell system (1) is used for driving the means of transport.

## Revendications

1. Procédé de fonctionnement d'un système de piles à combustible comprenant au moins une pile à combustible PEM ainsi qu'un dispositif de transport d'air côté air frais et une turbine côté air d'évacuation, le système de pile à combustible étant rincé au moins pendant une procédure d'arrêt par de l'air provenant du dispositif de transport d'air, **caractérisé en ce que** pendant le rinçage, une liaison est établie entre le dispositif de transport d'air (6) et le côté d'air de sortie entre la pile à combustible PEM (2) et la turbine (15), de sorte qu'au moins pour une partie du temps de l'air provenant du dispositif de transport d'air est guidé à travers la liaison directement pour le rinçage dans la turbine, sans traverser avant la pile à combustible proprement dit.

2. Procédé selon la revendication 1, **caractérisé en ce que** le rinçage pendant la procédure d'arrêt s'effectue directement après l'arrêt du système de pile à combustible (1).

3. Procédé selon la revendication 1 ou la revendication 2, **caractérisé en ce que** la liaison entre le dispositif de transport d'air (6) et le côté d'air de sortie est d'abord établie lorsque le rinçage a duré pendant un certain temps.

4. Procédé selon la revendication 1, 2 ou 3, **caractérisé en ce que** le rinçage est uniquement effectué lorsque la température ambiante devient inférieure à une valeur prédéfinie.

5. Procédé selon l'une quelconque des revendications 1 à 4, **caractérisé en ce que** le rinçage s'effectue en outre parfois pendant le fonctionnement du système de pile à combustible (1).

6. Procédé selon la revendication 5, **caractérisé en ce que** le rinçage occasionnel est déclenché en fonction de la température ambiante et en fonction de la durée de fonctionnement pendant le dernier rinçage.

7. Procédé selon la revendication 5 ou 6, **caractérisé en ce que** le rinçage occasionnel est déclenché dans des conditions de fonctionnement appropriées du système de pile à combustible (1).

8. Procédé selon l'une quelconque des revendications 1 à 7, **caractérisé en ce que** le dispositif de transport d'air (6) est entraîné au moins en partie par la turbine (15).

9. Procédé selon l'une quelconque des revendications 1 à 8, **caractérisé en ce qu'**une machine électrique (17) est au moins en relation indirecte sélectivement pour un entraînement motorisé ou pour une utilisation génératrice avec le dispositif de transport d'air (6) et la turbine (15).

10. Procédé selon l'une quelconque des revendications 1 à 9, **caractérisé en ce qu'**il est utilisé pour faire fonctionner un système de pile à combustible (1) dans un moyen de transport en particulier un véhicule automobile.

11. Procédé selon la revendication 10, **caractérisé en ce que** le système de pile à combustible (1) est utilisé pour entraîner le moyen de transport.
